Europäisches Patentamt

European Patent Office

Office européen des brevets

(11) Numéro de publication: **0 029 391**

**A1**

(12) **DEMANDE DE BREVET EUROPEEN**

(21) Numéro de dépôt: 80401636.8

(22) Date de dépôt: 14.11.80

(51) Int. Cl.³: **B 60 R 13/06**

(30) Priorité: 15.11.79 FR 7928214

(43) Date de publication de la demande: 27.05.81
Bulletin 81/21

(84) Etats contractants désignés: **DE GB IT**

(71) Demandeur: **AUTOMOBILES PEUGEOT, 75, avenue de la Grande Armée, F-75116 Paris (FR)**

(72) Inventeur: **Game, Pierre, 2, rue Métayer, F-95540 Mery sur Oise (FR)**

(74) Mandataire: **Durand, Yves et al, Cabinet Z. Weinstein 20, Avenue de Friedland, F-75008 Paris (FR)**

(54) **Enjoliveur destiné à habiller le bord d'un panneau.**

(57) La présente invention concerne un enjoliveur.

Cet enjoliveur (1) est constitué par un profilé élastiquement déformable qui comprend trois ailes successives et à savoir une première aile décorative (2) susceptible de prendre appui sur la surface d'un panneau ou d'une vitre (5), une deuxième aile (3) pénétrant dans l'encadrement (6) recevant le panneau (5), et une troisième aile (4) prenant appui par réaction sur la tranche (5a) du panneau (5) et comportant des lèvres d'accrochage (9).

L'enjoliveur de l'invention s'applique à la décoration du pourtour d'un pare-brise de véhicule.

1

<u>Enjoliveur destiné à habiller le bord d'un panneau."</u>

La présente invention a essentiellement pour objet un enjoliveur présentant la forme générale d'une baguette décorative et destiné en particulier à être monté sur le pourtour d'un pare-brise de véhicule.

On a déjà proposé des baguettes ou moulures décoratives diverses pour habiller le pourtour d'un pare-brise ou d'une custode de véhicule. Pour assurer le montage de la baguette dans l'encadrement ou feuillure portant la vitre généralement fixée par collage, on utilisait jusqu'à présent des moyens annexes. Ces moyens étaient par exemple constitués par des boutons à têtes solidaires de l'encadrement et sur lesquels on clippait la baguette décorative. Il est également connu d'utiliser des attaches de forme spéciale que l'on accroche sur des rivets soudés sur la carrosserie du véhicule, lesquelles attaches sont aptes à retenir élastiquement l'enjoliveur contre la vitre ou pare-brise.

Mais on comprend qu'il convient d'utiliser une multiplicité de tels moyens, en soi coûteux, pour assurer le montage de l'enjoliveur sur toute la périphérie du pare-brise. Par conséquent, l'utilisation de pièces ou attaches annexes et la main d'oeuvre exigée pour le montage d'un enjoliveur au moyen de telles pièces ou attaches, demeurent au total très onéreux.

Aussi, la présente invention a-t-elle pour but de remédier à ces inconvénients en proposant un nouvel enjoliveur qui est peu coûteux et n'exige qu'un temps de montage très bref comme on l'expliquera plus loin.

A cet effet, l'invention a pour objet un enjoliveur du type constitué par un profilé destiné à habiller le bord d'un panneau, tel que par exemple une vitre ou un pare-brise de véhicule, monté dans un encadrement, une feuillure ou analogue, caractérisé en ce que ledit profilé présente en section transversale une géométrie telle qu'il peut être directement clippé dans ledit encadrement ou ladite feuillure.

On comprend donc qu'un enjoliveur conforme à l'invention n'exige aucune pièce ou attache spéciale pour réaliser son montage sur le pourtour d'un panneau ou d'une vitre.

Selon une autre caractéristique de l'invention, le profilé précité, qui est élastiquement déformable, comprend trois ailes successives et à savoir une première aile susceptible de prendre appui sur la surface du panneau, une deuxième aile pénétrant dans l'encadrement précité, et une troisième aile susceptible de prendre appui par réaction sur la tranche du panneau dans l'encadrement.

On précisera ici qu'à l'état non monté de l'enjoliveur, la première aile précitée du profilé fait un angle avec la deuxième aile qui est inférieur à 90°, tandis que la troisième aile, dirigée vers la première aile, fait un angle avec la deuxième aile qui est sensiblement égal à 45°.

Suivant encore une autre caractéristique de l'enjoliveur selon l'invention, la deuxième aile précitée comporte une lèvre en saillie vers l'extérieur de l'enjoliveur et susceptible de prendre appui contre l'encadrement.

Selon encore une autre caractéristique, la troisième aile du profilé formant l'enjoliveur est munie d'une succession de lèvres, crans, dents ou analogues en regard de la tranche du panneau.

On ajoutera encore que l'extrémité libre de la première aile ainsi que la partie de raccordement de la première aile à la deuxième aile, et de la deuxième à la troisième aile, comportent des renflements et/ou arrondis réalisant des surfaces d'appui ponctuelles.

L'invention vise encore un panneau monté, par exemple collé, dans une feuillure d'encadrement, tel que par exemple un pare-brise de véhicule, dont le pourtour est habillé à l'aide d'au moins un enjoliveur répondant aux caractéristiques susmentionnées.

Le panneau ou le pare-brise précité peut être habillé d'un seul enjoliveur ou d'une pluralité d'enjoliveurs sensiblement rectilignes et dont la liaison est assurée, par exemple aux coins du panneau ou pare-brise, par des attaches susceptibles d'épouser la forme de la première aile précitée et chevauchant deux enjoliveurs successifs.

D'autres caractéristiques et avantages de l'invention apparaîtront mieux dans la description détaillée qui suit et se réfère aux dessins annexés, donnés uniquement à titre d'exemple, et dans lesquels :

La figure 1 est une vue extérieure et en bout d'un profilé formant enjoliveur selon l'invention.

La figure 2 est une vue en coupe transversale de l'enjoliveur de la figure 1 monté dans un encadrement, une feuillure ou analogue supportant une vitre, telle que par exemple un pare-brise de véhicule.

La figure 3 est une vue de face d'un pare-brise équipé d'un enjoliveur selon la figure 1.

La figure 4 est une vue de face d'une attache permettant le raccordement de deux enjoliveurs selon l'invention.

La figure 5 est une vue en coupe suivant la ligne V-V de la figure 4.

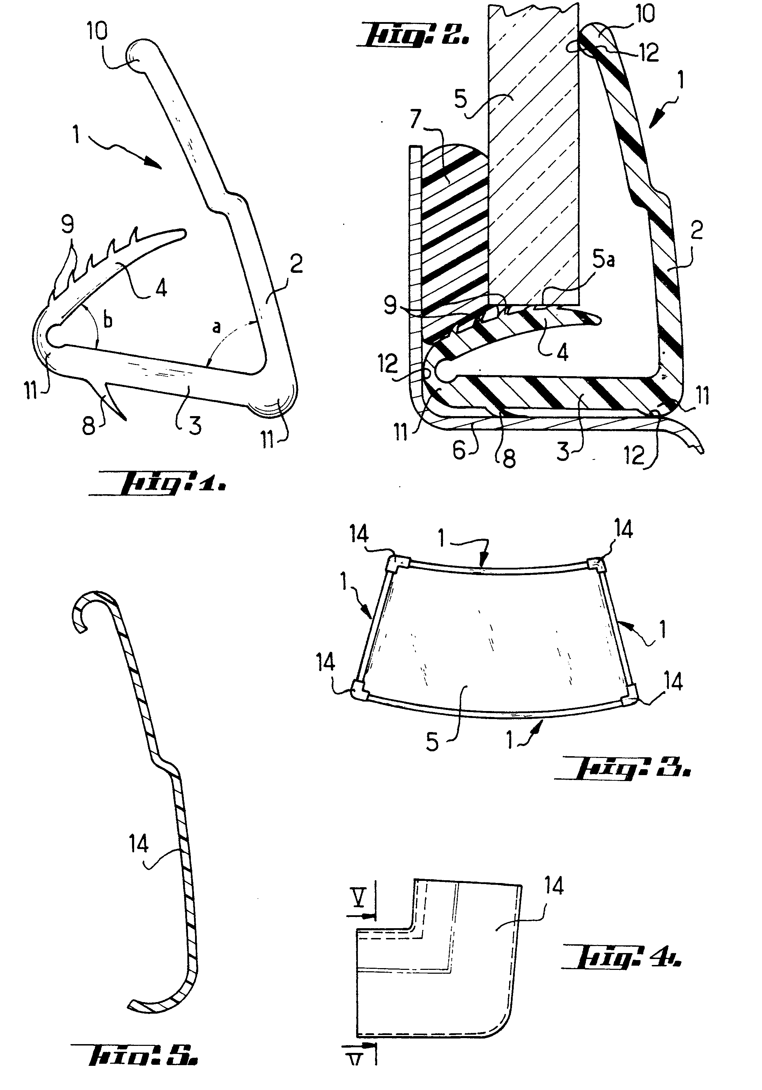

Selon l'exemple de réalisation illustré par les figures 1 et 2, un enjoliveur 1 conforme à l'invention est constitué par un profilé, fabriqué par exemple par extrusion d'une matière plastique, telle que polycarbonate, lequel profilé comprend essentiellement trois ailes successives et à savoir :

- une première aile 2 susceptible de prendre appui sur la surface d'un panneau 5 qui peut être par exemple le pare-brise d'un véhicule,

- une deuxième aile 3 qui, comme on le voit sur la figure 2, pénètre dans l'encadrement ou feuillure 6 recevant le panneau 5 qui, s'il s'agit d'un pare-brise, est le plus souvent fixé sur ledit encadrement 6 au moyen d'un ruban de colle 7, et

- une troisième aile 4 qui prend appui par réaction sur la tranche 5a du panneau ou de la vitre 5, comme on le voit sur la figure 2.

A l'état non monté de l'enjoliveur 1, et comme on le voit sur la figure 1, la première aile 2 du profilé fait un angle a avec la deuxième aile 3 qui est inférieur à 90°, tandis que la troisième aile 4, dont l'extrémité libre est dirigée vers la première aile 2, fait un angle b avec la deuxième aile 3 qui est sensiblement égal à 45°.

Comme il apparaît clairement sur les figures 1 et 2, la deuxième aile 3 comporte une lèvre 8 en saillie vers l'extérieur de l'enjoliveur 1 et pouvant prendre appui en se déformant, contre l'encadrement 6. Cette lèvre extérieure 8 assure avantageusement l'étanchéité et réagit sur la feuillure 6 compte tenu de la pression exercée lors du montage de l'enjoliveur, comme on le verra plus loin.

La troisième aile 4 est munie d'une succession de lèvres, crans ou analogues 9 qui font saillie vers l'extérieur en regard de la tranche 5a de la vitre 5, comme on le voit sur la figure 2.

L'extrémité libre 10 de la première aile 2, ainsi que les parties 11 de raccordement de la première aile 2 à la deuxième aile 3, et de la deuxième aile 3 à la troisième aile 4, comportent des renflements et/ou arrondis qui réalisent des surfaces d'appui ponctuelles, comme on l'a montré en 12.

On comprend donc que l'enjoliveur 1 qui vient d'être décrit peut être monté directement entre la feuillure 6 et la tranche 5a d'un pare-brise 5 collé dans ladite feuillure.

Plus précisément, l'enjoliveur 1 est élastiquement déformable de façon à permettre son montage dans la feuillure 6 et sa retenue dans celle-ci. Lors de ce montage, la troisième aile 4 qui réagit contre la

6

0029391

tranche 5a de la vitre 5, communique une pression à la deuxième aile 3 qui tend à s'appliquer contre la feuillure tout en s'écartant de la première aile 2 qui ainsi prend fermement appui par son extrémité libre 10 sur la vitre 5. Bien entendu, la première aile 2 constitue à proprement parler la partie décorative de l'enjoliveur 1 qui habille le pourtour de la vitre 5.

Les lèvres ou crans 9 de la troisième aile 4 augmentent l'effet d'encastrement de l'enjoliveur 1 entre vitre 5 et feuillure 6. A cet égard, on remarquera que l'enjoliveur 1 peut être engagé dans la feuillure 5 avant polymérisation du ruban de colle 7, ce dernier venant avantageusement se répandre et se répartir entre les lèvres 9, ce qui, comme on le voit sur la figure 2, augmente encore l'ancrage de l'enjoliveur dans la feuillure.

Par ailleurs, l'élasticité nécessaire des ailes de l'enjoliveur 1 permettra avantageusement d'absorber les différentes possibilités d'épaisseur de vitre 5 ou tout simplement les tolérances de mise en place de ladite vitre dans la feuillure 6.

L'enjoliveur conforme à l'invention peut être réalisé en une seule pièce et être appliqué directement sur le pourtour de la vitre ou pare-brise 5.

On peut aussi, comme on le voit sur la figure 3, utiliser plusieurs enjoliveurs 1 sensiblement rectilignes et raccordés par une attache ou analogue 14 prévue aux quatre coins de la vitre. L'attache 14, comme on le voit sur les figures 4 et 5, présentera alors un profil épousant sensiblement la première aile 2 et chevauchant deux enjoliveurs rectilignes successifs.

On a donc réalisé suivant l'invention un enjoliveur peu coûteux, qui peut être directement clippé dans une feuillure sans la nécessité d'une agrafe particulière et qui au surplus est parfaitement étanche grâce à la lèvre 8 et aux appuis ponctuels 12, de sorte que toute corrosion de la feuillure est empêchée.

Bien entendu, l'invention n'est nullement limitée au mode de réalisation décrit et illustré qui n'a été donné qu'à titre d'exemple.

C'est ainsi que les dimensions, la forme et le nombre de lèvres ou crans en saillie de l'enjoliveur 1 peuvent être quelconques sans sortir du cadre de l'invention.

C'est-à-dire que celle-ci comprend tous les équivalents techniques des moyens décrits ainsi que leurs combinaisons si elles sont effectuées suivant l'esprit de l'invention et mises en oeuvre dans le cadre des revendications qui suivent.

Revendications

1. Enjoliveur du type constitué par un profilé destiné à habiller le bord d'un panneau, tel que par exemple une vitre ou un pare-brise de véhicule, monté dans un encadrement, une feuillure ou analogue, caractérisé en ce que ledit profilé présente en section transversale une géométrie telle qu'il peut être directement clippé dans ledit encadrement ou ladite feuillure.

2. Enjoliveur selon la revendication 1, caractérisé en ce que le profilé précité qui est élastiquement déformable comprend trois ailes successives et à savoir une première aile susceptible de prendre appui sur la surface du panneau, une deuxième aile pénétrant dans ledit encadrement, et une troisième aile susceptible de prendre appui par réaction sur la tranche dudit panneau.

3. Enjoliveur selon la revendication 1 ou 2, caractérisé en ce qu'à l'état non monté de l'enjoliveur, la première aile précitée du profilé fait un angle avec la deuxième aile qui est inférieur à 90°, tandis que la troisième aile, dirigée vers la première aile, fait un angle avec la deuxième aile qui est sensiblement égal à 45°.

4. Enjoliveur selon la revendication 2 ou 3, caractérisé en ce que la deuxième aile précitée comporte au moins une lèvre en saillie vers l'extérieur de l'enjoliveur et susceptible de prendre appui contre l'encadrement précité.

5. Enjoliveur selon l'une des revendications 2 à 4, caractérisé en ce que la troisième aile précitée est munie d'une succession de lèvres, crans, dents ou analogues en regard de la tranche du panneau.

6. Enjoliveur selon l'une des revendications 2 à 5, caractérisé en ce que l'extrémité libre de la première aile ainsi que la partie de raccordement de la première aile à la deuxième aile, et de la deuxième à la troisième aile, comportent des renflements et/ou arrondis réalisant des surfaces d'appui ponctuelles.

7. Panneau monté, par exemple collé, dans une feuillure d'encadrement, tel que par exemple pare-brise de véhicule, caractérisé en ce que son pourtour est habillé à l'aide d'au moins un enjoliveur selon l'une des revendications 1 à 6.

8. Panneau ou pare-brise selon la revendication 7, caractérisé en ce qu'il est habillé d'autant d'enjoliveurs précités que le panneau a de côtés, la liaison entre lesdits enjoliveurs étant assurée par des attaches dont la forme épouse la première aile précitée et qui chevauchent deux enjoliveurs successifs.

9. Véhicule équipé d'un pare-brise avec enjoliveur selon l'une des revendications 1 à 6.

0029391

*Fig. 1.*

*Fig. 2.*

*Fig. 3.*

*Fig. 5.*

*Fig. 4.*

**Office européen des brevets**

## RAPPORT DE RECHERCHE EUROPEENNE

EP 80 40 1636

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | US - A - 4 035 017 (GRIFFIN)<br>* Colonne 1, ligne 33 - colonne 4, ligne 4; figures 1-4 *<br>-- | 1-4,7, 9 | B 60 R 13/06 |
| A | DE - B - 1 279 492 (FORD)<br>* Colonne 1, ligne 33 - colonne 3, ligne 14; figures 1,2 *<br>-- | 1,2 | |
| A | US - A - 3 774 363 (KENT)<br>* Colonne 1, lignes 39-67; figures 1-5 *<br>-- | 1,5 | **DOMAINES TECHNIQUES RECHERCHES (Int. Cl. 3)**<br><br>B 60 R 13/ |
| A | US - A - 3 093 844 (BROCK)<br>* Colonne 3, lignes 4-42; figures 1,2,4 *<br>---- | 1,8 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-02-1981 | AYITER |

OEB Form 1503.1 06.78